# EUROPÄISCHE PATENTSCHRIFT

(11) **EP 0 743 724 B1**
(45) Veröffentlichungstag und Bekanntmachung des Hinweises auf die Patenterteilung: **21.07.1999**
(21) Anmeldenummer: 96106784.0
(22) Anmeldetag: 29.04.1996
(51) Int. Cl.: H01S 3/094, H01S 3/16, H01S 3/08, H01S 3/109

(54) **Longitudinal gepumpter Laser**
Longitudinally pumped laser
Laser à pompage longitudinale

(30) Priorität: 16.05.1995 DE 19517963
(43) Veröffentlichungstag der Anmeldung: 20.11.1996
(73) Patentinhaber: Coherent Lübeck GmbH, 23569 Lübeck (DE)
(72) Erfinder: Kortz,Hans-Peter,Dr., 23689 Pansdorf (DE)
(74) Vertreter: Klunker . Schmitt-Nilson . Hirsch

(56) Entgegenhaltungen:
- GB-A- 2 245 378
- JP-A- 7 086 668
- JP-A- 7 099 360
- US-A- 5 084 840
- PATENT ABSTRACTS OF JAPAN Bd. 17, Nr. 706 (E-1483) 22 Dezember 1993 & JP-A-05 243 650 (HITACHI LTD) 21 September 1993
- PATENT ABSTRACTS OF JAPAN Bd. 17, Nr. 599 (E-1455) 02 November 1993 & JP-A-05 183 220 (MATSUSHITA ELECTRON CORP) 23 Juli 1993
- PATENT ABSTRACTS OF JAPAN Bd. 9, Nr. 113 (P-356) 17 Mai 1985 & JP-A-06 000 411 (MATSUSHITA DENKI SANGYO KK) 11 Januar 1994
- PATENT ABSTRACTS OF JAPAN Bd. 18, Nr. 481 (P-1797) 07 September 1994 & JP-A-06 160 930 (MATSUSHITA ELECTRIC IND CO LTD)
- PATENT ABSTRACTS OF JAPAN Bd. 15, Nr. 273 (E-1088) 11 Juli 1991 & JP-A-03 093 285 (MATSUSHITA ELECTRIC IND CO LTD) 18 April 1991
- PATENT ABSTRACTS OF JAPAN Bd. 7, Nr. 249 (P-234) 05 November 1983 & JP-A-58 132 709 (HIRAMA RIKA KENKYUSHO:KK) 08 August 1983
- PATENT ABSTRACTS OF JAPAN Bd. 17, Nr. 224 (P-1530) 10 Mai 1993 & JP-A-04 355 705 (OKI ELECTRIC IND CO LTD) 09 Dezember 1992
- PATENT ABSTRACTS OF JAPAN Bd. 18, Nr. 406 (E-1585) 28 Juli 1994 & JP-A-06 120 597 (SUMITOMO METAL MINING CO LTD) 28 April 1994
- PATENT ABSTRACTS OF JAPAN Bd. 18, Nr. 359 (E-1574) 06 Juli 1994 & JP-A-06 097 545

## Beschreibung

Die Erfindung betrifft einen longitudinal gepumpten Laser gemäß Oberbegriff des Anspruchs 1 bzw. des Anspruchs 6. Der Begriff "longitudinal gepumpter Laser" bedeutet, daß das von der Pumplichtquelle erzeugte Pumplicht parallel oder zumindest annähernd parallel zu der Richtung des von dem Laser erzeugten Laserstrahls in den Resonator eingekoppelt wird. Die Einkoppelung kann z.B. durch den Einkoppelspiegel des Resonators hindurch erfolgen.

Aus der US-Re. 34 729 ist ein Laser bekannt, bei dem Pumplichtquelle, Einkoppeloptik und Resonator auf einer gemeinsamen optischen Achse angeordnet sind (Fig. 2a der US Re. 34 729). Bei einem derartigen Laser werden meist alle Komponenten so justiert, daß der Pumplichtstrahl in seinem Verlauf möglichst gut dem Modenvolumen des gepumpten Lasers angepaßt ist und das Pumplicht möglichst vollständig in diesem Modenvolumen absorbiert wird.

Nachteilig an dieser Anordnung ist, daß Pumplicht von der dem Pumpmodul zugewandten Oberfläche des Resonators auf die Pumplichtquelle zurückreflektiert werden kann. Weiterhin kann ein Teil des von dem Laser erzeugten Lichtes den Resonator durch die erste spiegelnde Oberfläche als Leckstrahlung verlassen und ebenfalls auf die Pumplichtquelle treffen. Das zurückreflektierte Pumplicht und/oder die Leckstrahlung des Lasers können die Funktion der Pumplichtquelle stören. Die auftreffende Strahlung führt zu einer Erwärmung der Pumplichtquelle, wodurch die Intensität und die Wellenlänge des Pumplichtes beeinflußt und die Pumplichtquelle beschädigt oder sogar zerstört werden kann.

Ist die Pumplichtquelle ein Laser, speziell eine Laserdiode, und trifft das zurückreflektierte Pumplicht auf die aktive Fläche der Pumplichtquelle (Pumplaser), so kann sich zwischen der Austrittsfläche des Pumplasers und der Eintrittsfläche des gepumpten Lasers ein zusätzlicher Resonator ausbilden. Dieser zusätzliche Resonator wird instabil sein und stört die Moden des Pumplasers, läßt dessen Leistung und Wellenlänge fluktuieren und führt so zu einer gestörten Funktion des gepumpten Lasers.

Arbeitet der gepumpte Laser im gepulsten Betrieb, so kann schon bei sehr kleiner Leckrate des Resonators die Leckstrahlung eine sehr große Intensität erreichen und zu einer Beschädigung oder Zerstörung der Pumplichtquelle führen.

Aus der US-PS 5 315 613 ist ein diodengepumpter Festkörperlaser bekannt, bei dem die optische Achse der Laserdiode, die als Pumplichtquelle dient, parallel versetzt ist zu der optischen Achse der Einkoppeloptik. Hiermit soll eine Reduzierung des auf die Laserdiode zurückreflektierten Lichtes erreicht werden. Nachteilig an dieser Anordnung ist, daß die nicht zentrische Durchstrahlung der Einkoppeloptik zu Abbildungsfehlern führt, die die Einkoppelung des Pumpstrahls in das Modenvolumen negativ beeinflussen können. Pumplichtquellen (speziell Laserdioden) werden standardmäßig als eine Einheit mit einer zugehörigen Einkoppeloptik, die zentrisch zu dem Pumplichtstrahl justiert ist, gefertigt. Beim Einsatz einer nicht zentrisch justierten Einkoppeloptik ist eine fertigungstechnisch aufwendige Spezialanfertigung des Pumpmoduls notwendig, wodurch höhere Kosten entstehen.

In Übereinstimmung mit dem Oberbegriff des Anspruchs 1 (und des Anspruchs 6) zeigt die JP-A-6097545 einen longitudinal gepumpten Laser, bei dem der Winkel zwischen der durch die Einkoppeloptik definierten ersten optischen Achse und der durch den Resonator definierten zweiten optischen Achse zwischen 4° und 10° liegt.

Aus der US-A-5,084,840 ist ein longitudinal gepumpter Laser mit Pumpmodul bekannt, welches in Bezug auf den Resonator derart angeordnet ist, daß eine durch die Pumplichtquelle und die Einkoppeloptik des Resonators definierte erste optische Achse mit einer durch den Resonator definierten zweiten optischen Achse einen Winkel einschließt. Zu diesem Zweck sind drei Seiten eines den Resonator bildenden Festkörper-Lasermaterials verspiegelt, und dieser Körper ist abgewinkelt im Strahlengang der Pumplichtquelle und der Einkoppeloptik angeordnet.

Aus der JP-A-7099360 (= US-A-5,436,920) ist ein longitudinal gepumpter Laser bekannt, bei dem das Lasermedium und ein Einkoppelspiegel befestigt sind. Die geometrische Form des Substrats ist so gewählt, daß das Lot auf der der Pumplichtquelle zugewandten Oberfläche des Substrats mit einer durch den Resonator gebildeten optischen Achse einen Winkel zwischen 5° und 15° einschließt.

Aufgabe der Erfindung ist es, einen longitudinal gepumpten Laser anzugeben, bei dem die Beeinträchtigung der Funktion der Pumplichtquelle durch zurückreflektiertes Pumplicht und/oder durch Leckstrahlung des Resonators vermieden wird, ohne daß die Anpassung des Pumplichtstrahles an das Modenvolumen des Lasers merklich verschlechtert wird.

Die Aufgabe wird gelöst, durch die Merkmale des Anspruchs 1 oder des Anspruchs 6.

Der Vorteil der Erfindung in ihrer Ausführung nach den Ansprüchen 1 bis 5 liegt darin, daß bedingt durch den Winkel, den die optische Achse des Pumpmoduls mit der optischen Achse des Resonators einschließt, Pumplicht, welches an dem Einkoppelspiegel des Resonators reflektiert wird, nicht in sich selbst zurückläuft und bei hinreichend großem Winkel die Pumplichtquelle nicht in ihrer Funktion stören kann.

Ebenso beeinträchtigt Laserstrahlung, die den Resonator durch den Einkoppelspiegel als Leckstrahlung verläßt, die Pumplichtquelle nicht.

Der hierfür minimal erforderliche Winkel hängt ab vom Abstand zwischen Pumplichtquelle und Einkoppeloptik, dem Abstand zwischen Einkoppeloptik und Resonator, der Brennweite und der freien Öffnung der Einkoppeloptik sowie der Größe der gegen eingestrahltes Licht empfindlichen Fläche der Pumplichtquelle. Bei entsprechenden optischen und geometrischen Gegebenheiten kann ein Winkel von 0,05° schon ausreichend sein.

Bei sehr großem Winkel zwischen den beiden optischen Achsen wird die Anpassung des Pumplichtstrahls an das Modenvolumen des Lasers verschlechtert. Die Größe des Winkels, bei dem eine merkliche Verschlechterung eintritt, hängt im wesentlichen ab von dem Verhältnis der Durchmesser von Pumplichtstrahl und Modenvolumen und von der Absorptionslänge des Pumplichtstrahls in dem Lasermedium. Ein Winkel von maximal etwa 1° zwischen den beiden optischen Achsen hat auch bei ungünstigen optischen Gegebenheiten keinerlei negativen Einfluß auf die Anpassung des Pumpstrahls an das Modenvolumen des Lasers.

Aus der EP 632 551 A1 ist ein Festkörperlaser bekannt, bei dem der Resonator aus einem Auskoppelspiegel und einem daneben angeordneten Endspiegel sowie einem gegenüber diesen beiden Spiegeln angeordneten, als Lasermedium dienenden Kristall aufgebaut ist. Die den Spiegeln abgewandte Seite des Kristalls ist verspiegelt und mit dieser verspiegelten Fläche ist der Kristall auf einer Kühloberfläche montiert. Soll der Laser annähernd longitudinal gepumpt werden, so muß das Pumplicht in die den beiden Spiegeln zugewandte Oberfläche des Kristalls eingestrahlt werden. Da die Pumplichtquelle nur seitlich von den beiden Spiegeln angeordnet werden kann, ist die Einstrahlung nur unter einem gewissen Winkel zur optischen Achse des Resonators möglich (siehe Fig. 21 der EP 632 551 A1). Das Einstrahlen des Pumplichtes unter einem Winkel zur optischen Achse des Resonators ergibt sich also bei dem bekannten Laser zwangsläufig aus der Anordnung der übrigen Komponenten heraus und wird nicht zu dem Zweck eingesetzt, reflektiertes Pumplicht von der Pumplichtquelle fernzuhalten. Ganz im Gegenteil führt der in der Fig. 21 der EP 632 551 A1 dargestellte Spiegel (202) sogar dazu, daß das an der Oberfläche des Kristalls reflektierte Pumplicht wieder in die Pumplichtquelle zurückreflektiert wird.

In den Ansprüchen 6 bis 10 ist eine weitere Ausführungsform der Erfindung beschrieben, deren Vorteil darin besteht, daß die Richtung der Pumpstrahlung annähernd parallel zur Richtung der optischen Achse bleiben kann, Pumplicht aber trotzdem nicht in die Pumplichtquelle zurückreflektiert wird. Die Anpassung des Pumplichtstrahls an das Modenvolumen wird nur unwesentlich beeinflußt. Zum zusätzlichen Abblocken von Leckstrahlung des Lasers kann die eben beschriebene Ausführung der Erfindung mit einem Filter zwischen dem Resonator und der Pumplichtquelle ergänzt werden, wie es in den Ansprüchen 11 und 12 beschrieben ist.

Das Filter kann auch als Bestandteil der Einkoppeloptik ausgeführt sein, indem z.B. eine Oberfläche der Einkoppeloptik als Interferenzfilter ausgebildet wird.

Die Erfindung wird anhand von Ausführungsbeispielen und der Zeichnung erläutert.

Es zeigen in schematischer Darstellung:
- **Fig. 1**: einen Laser, bei dem die optischen Achsen des Pumpmoduls und des Resonators einen Winkel einschließen,
- **Fig. 2**: einen Ausschnitt des Lasers von Fig. 1,
- **Fig. 3**: einen Laser, bei dem ein Filter zwischen der Pumplichtquelle und dem Resonator angeordnet ist,
- **Fig. 4**: einen Laser, bei dem das Lot auf dem Einkoppelspiegel und die optische Achse des Resonators einen Winkel einschließen und
- **Fig. 5**: einen Ausschnitt des Lasers von Fig. 4.

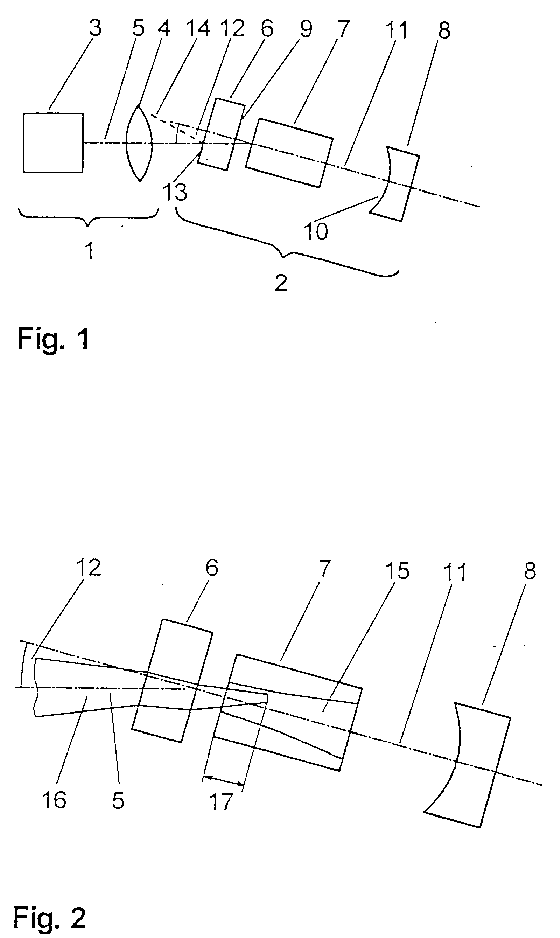

Der in Fig. 1 dargestellte Laser besteht aus einem Pumpmodul 1 und einem Resonator 2. Das Pumpmodul ist aus einer Pumplichtquelle 3 und einer Einkoppeloptik 4 aufgebaut. Als Pumplichtquelle dient in diesem Beispiel eine Laserdiode. Die Pumplichtquelle 3 und die Einkoppeloptik 4 definieren eine erste optische Achse 5, längs der sich das Pumplicht der Pumplichtquelle 3 ausbreitet. Der Resonator 2 ist aus einem Einkoppelspiegel 6, einem Lasermedium 7 und einem Auskoppelspiegel 8 aufgebaut. Durch den Einkoppelspiegel 6 gelangt Pumplicht in den Resonator 2 und regt diesen zur Erzeugung von Laserstrahlung an, die den Resonator zum Teil durch den Auskoppelspiegel 8 verläßt. Der Einkoppelspiegel 6 ist durchlässig für die Pumpstrahlung und weitgehend undurchlässig für die von dem Laser erzeugten Wellenlängen. Die dem Lasermedium 7 zugewandte Seite 9 des Einkoppelspiegels 6 ist eine erste spiegelnde Oberfläche des Lasers. Sie ist in diesem Beispiel plan ausgeführt. Als Lasermedium 7 wird in diesem Beispiel ein Nd:YAG-Kristall verwandt. Die dem Lasermedium 7 zugewandte Fläche 10 des Auskoppelspiegels 8 stellt eine zweite spiegelnde Oberfläche dar. Sie ist in diesem Beispiel konkav ausgeführt.

Die Erfindung ist in allen ihren Ausführungsformen ohne weiteres auch mit konkavem Einkoppelspiegel 6 und planem Auskoppelspiegel 8 realisierbar.

Durch den Resonator ist eine zweite optische Achse 11 definiert, längs der sich das von dem Laser verstärkte Licht ausbreitet. Das Pumpmodul 1 und der Resonator 2 sind so zueinander justiert, daß die erste optische Achse 5 und die zweite optische Achse 11 einen Winkel 12 miteinander einschließen.

Der an der dem Pumpmodul 1 zugewandten Oberfläche 13 des Einkoppelspiegels 6 reflektierte Anteil 14 des Pumplichtes wird um den doppelten Winkel 12 aus der Richtung des Pumplichtstrahles abgelenkt und gelangt nicht mehr auf empfindliche Teile der Pumplichtquelle 3. Bei großen Winkeln 12 wird das reflektierte Licht sogar völlig an dem Pumpmodul 1 vorbeigeleitet.

Fig. 2 zeigt einen Ausschnitt von Fig. 1 mit dem Einkoppelspiegel 6, dem Lasermedium 7 und dem Auskoppelspiegel 8. In dem Lasermedium 7 ist das Modenvolumen 15 angedeutet. Die Pumpstrahlung 16 tritt durch den Einkoppelspiegel 6 in das Modenvolumen 15 ein und wird hier absorbiert. Für einen guten Wirkungsgrad des Lasers ist wichtig, daß die Pumpstrahlung 16 möglichst vollständig in dem Modenvolumen 15 absorbiert wird. Wird der Winkel 12 im Verhältnis zum Durchmesser des Modenvolumens 15, dem Durchmesser des Pumpstrahls 16 und der als Absorptionslänge 17 bezeichneten Wegstrecke, auf der das Pumplicht im Lasermedium zu etwa 95% absorbiert wird, nicht zu groß gewählt, so ist eine nahezu vollständige Absorption des Pumplichtes im Modenvolumen möglich.

Fig. 3 zeigt zur Erläuterung der Erfindung eine Anordnung, bei der die beiden optischen Achsen 5, 11 identisch sind. Zwischen der Einkoppeloptik 4 und dem Einkoppelspiegel 6 ist ein Filter 18 angeordnet. Im Resonator 2 ist zusätzlich ein nichtlinearer Kristall zur Frequenzverdoppelung angeordnet, der aber hier nur beispielhaft eingeführt wird und nicht für die Erfindung notwendig ist. Ansonsten stimmt der Aufbau mit dem von Fig. 1 überein. Das Filter ist so ausgeführt, daß es für die Wellenlängen des Pumplichts möglichst gut durchlässig ist, die von dem Laser abgegebenen Wellenlängen aber möglichst wenig hindurchläßt. Es kann zum Beispiel als Interferenzfilter ausgebildet sein, und für die Pumpstrahlung einen Transmissionsgrad von mehr als ca. 80 %, für die Laserstrahlung aber einen Transmissionsgrad von weniger als ca. 20 % haben. Laserlicht, welches als Leckstrahlung den Einkoppelspiegel 6 passiert, wird von dem Filter 18 aufgehalten und kann somit die Pumplichtquelle nicht schädigen.

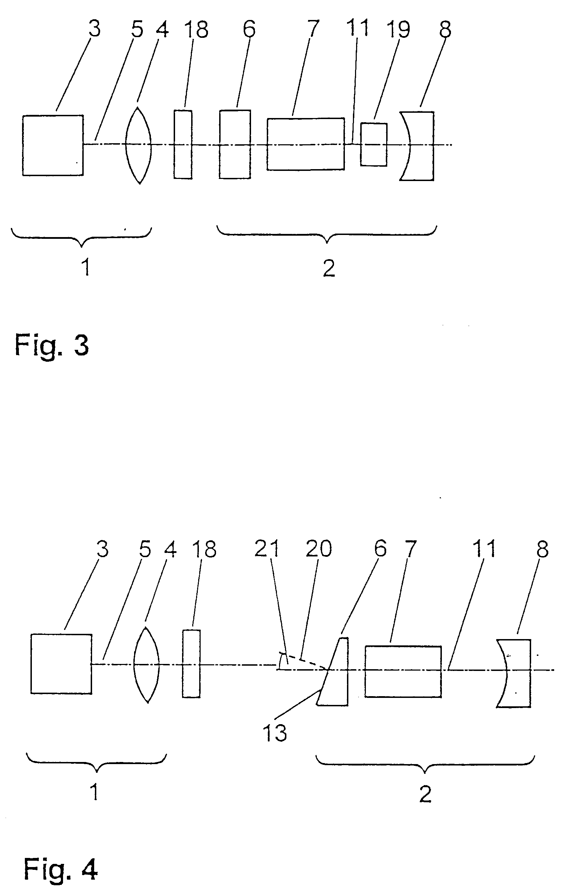

Fig. 4 zeigt eine weitere Ausführungsform der Erfindung, bei der der Einkoppelspiegel 6 prismenförmig ausgebildet ist. Die verspiegelte Oberfläche 9 des Einkoppelspiegels 6 steht senkrecht auf der optischen Achse 11 des Lasers. Das Lot 20 auf der dem Pumpmodul 1 zugewandten Oberfläche 13 des Einkoppelspiegels 6 schließt mit der optischen Achse 11 einen Winkel 21 ein. Der Pumplichtstrahl 16 trifft nicht senkrecht auf die Oberfläche 13, wodurch ebenso wie in der Ausführung nach Fig. 1 verhindert wird, daß reflektiertes Pumplicht die Pumplichtquelle 3 stört.

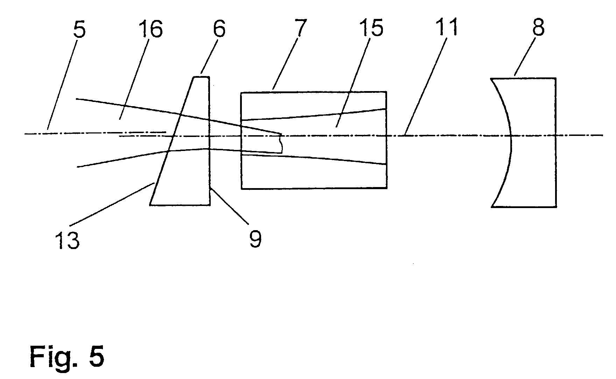

Fig. 5 zeigt einen Ausschnitt von Fig. 4 mit dem Einkoppelspiegel 6, dem Lasermedium 7 und dem Auskoppelspiegel 8. Der Pumpstrahl 16 trifft unter einem von der Senkrechten abweichenden Winkel auf die Oberfläche 13 des Einkoppelspiegels 6, wird gebrochen, tritt durch die verspiegelte Oberfläche 9, wobei er wieder gebrochen wird, und wird dann im Modenvolumen 15 absorbiert. Die bei der Ausführung nach Fig. 1 angegebenen Bedingungen für eine möglichst vollständige Absorption gelten hier entsprechend.

Bei allen Ausführungsformen kann auch der Einkoppelspiegel 6 als Konkav spiegel und der Auskoppelspiegel 8 als Planspiegel oder können beide als Konkavspiegel ausgebildet sein. In letzterem Fall ist bei der Ausführung nach Fig. 4 dann der Winkel maßgebend, der zwischen der dem Pumpmodul 1 zugewandten Oberfläche und der Tangente an der konkaven Oberfläche am Durchtrittspunkt der optischen Achse 11 des Resonators durch den Einkoppelspiegel 6 besteht.

Bei allen Ausführungsformen können im Laser zusätzliche Komponenten angeordnet sein, wie z.B. ein nichtlinearer Kristall 19 zur Frequenzvervielfachung, und es können Komponenten miteinander eine Einheit bilden. So ist es z.B. möglich, die Endflächen des Lasermediums 7 entsprechend zu bearbeiten und als Ein- bzw. Auskoppelspiegel zu nutzen.

## Patentansprüche

1. Longitudinal gepumpter Laser, umfassend: ein Pumpmodul (1) mit einer Pumplichtquelle (3) und einer Einkoppeloptik (4), sowie einen Resonator (2) mit einem Einkoppelsiegel (6), einem Lasermedium (7) und einem Auskoppelspiegel (8),
wobei
das Pumpmodul (1) und der Resonator (2) derart zueinander angeordnet sind, daß eine durch die Pumplichtquelle (3) und die Einkoppeloptik (4) definierte erste optische Achse (5) mit einer durch den Resonator (2) definierten zweiten optischen Achse (11) einen Winkel (12) einschließt, welcher größer als 0° ist,
**dadurch gekennzeichnet**, daß der Winkel zwischen der ersten und der zweiten optischen Achse (5, 11) kleiner als 1° ist.

2. Laser nach Anspruch 1,
**dadurch gekennzeichnet,**
daß der Winkel (12) zwischen der ersten und der zweiten optischen Achse (5, 11) im Bereich zwischen 0,05° und 1° liegt.

3. Laser nach Anspruch 1 oder 2,
**dadurch gekennzeichnet,**
daß die Pumplichtquelle (3) eine oder mehrere Laserdioden aufweist.

4. Laser nach einem der Ansprüche 1 bis 3,
**dadurch gekennzeichnet,**
daß das Lasermedium ein Festkörper (7), insbesondere ein dotierter Kristall ist.

5. Laser nach einem der Ansprüche 1 bis 4,
**dadurch gekennzeichnet,**
daß der Laser einen nichtlinearen Kristall (19) zur Frequenzverdopplung aufweist.

6. Longitudinal gepumpter Laser, umfassend: ein Pumpmodul (1) mit einer Pumplichtquelle (3) und einer Einkoppeloptik (4) sowie einem Resonator (2) mit einem Einkoppelspiegel (6), einem Lasermedium (7) und einem Auskoppelspiegel (8),
**dadurch gekennzeichnet,**
daß die geometrische Form des Einkoppelspiegels (6) derart gewählt wird, daß das Lot (20) auf der dem Pumpmodul (1) zugewandten Oberfläche (13) des Einkoppelspiegels (6) mit einer durch den Resonator (2) definierten optischen Achse (11) einen Winkel (21) einschließt, welcher größer als 0° und kleiner als 1° ist.

7. Laser nach Anspruch 6,
**dadurch gekennzeichnet,**
daß der Winkel (21) im Bereich zwischen 0,05° und 1° gewählt wird.

8. Laser nach Anspruch 6 oder 7,
**dadurch gekennzeichnet,**
daß die Pumplichtquelle eine oder mehrere Laserdioden (3) aufweist.

9. Laser nach Anspruch 6 bis 8,
**dadurch gekennzeichnet,**
daß das Lasermedium ein Festkörper (7), insbesondere ein dotierter Kristall ist.

10. Laser nach einem der Ansprüche 6 bis 9,
**dadurch gekennzeichnet,**
daß der Laser einen nichtlinearen Kristall (19) zur Frequenzverdopplung aufweist.

11. Laser nach einem der Ansprüche 6 bis 10,
**dadurch gekennzeichnet,**
daß zwischen der Pumplichtquelle (3) und dem Resonator (2) ein Filter (18) angeordnet ist, welches weitgehend durchlässig für das Pumplicht und weitgehend undurchlässig für eine oder mehrere von dem Laser erzeugte Wellenlängen ist.

12. Laser nach Anspruch 11,
**dadurch gekennzeichnet,**
daß mindestens ein Element der Einkoppeloptik (4) als Filter (18) ausgebildet ist.

## Claims

1. A longitudinally pumped laser comprising: a pumping module (1) with a pumped light source (3) and an input optic (4), as well as a resonator (2) with an input mirror (6), a laser medium (7) and an output mirror (8), wherein the pumping module (1) and the resonator (2) are disposed relative to each other in such a way that a first optical axis (5) defined by the pumped light source (3) and the input optic (4) encloses with a second optical axis (11) defined by the resonator (2) an anqle (12) which is qreater than 0°, characterized in that the angle between the first and second optical axes (5, 11) is smaller than 1°.

2. The laser of claim 1, characterized in that the angle (12) between the first and second optical axes (5, 11) is in the ranqe between 0.05° and 1°.

3. The laser of claim 1 or 2, characterized in that the pumped light source (3) has one or more laser diodes.

4. The laser of any of claims 1 to 3, characterized in that the laser medium is a solid (7), in particular a doped crystal.

5. The laser of any of claims 1 to 4, characterized in that the laser has a nonlinear crystal (19) for frequency doubling.

6. A longitudinally pumped laser comprising: a pumping module (1) with a pumped light source (3) and an input optic (4) as well as a resonator (2) with an input mirror (6), a laser medium (7) and an output mirror (8), characterized in that the geometric shape of the input mirror (6) is selected in such a way that the perpendicular (20) on the surface (13) of the input mirror (6) facing the pumping module (1) encloses with an optical axis (11) defined by the resonator (2) an anqle (21) which is qreater than 0° and smaller than 1°.

7. The laser of claim 6, characterized in that the angle (21) is selected in the ranqe between 0.05° and 1°.

8. The laser of claim 6 or 7, characterized in that the pumped light source has one or more laser diodes (3).

9. The laser of claim 6 to 8, characterized in that the laser medium is a solid (7), in particular a doped crystal.

10. The laser of any of claims 6 to 9, characterized in that the laser has a nonlinear crystal (19) for frequency doubling.

11. The laser of any of claims 6 to 10, characterized in that a filter (18) is disposed between the pumped light source (3) and the resonator (2), the filter being largely pervious to the pumped light and largely impervious to one or more wavelengths produced by the laser.

12. The laser of claim 11, characterized in that at least one element of the input optic (4) is formed as a filter (18).

## Revendications

1. Laser à pompage longitudinal comprenant : un module de pompage (1) comprenant une source de lumière de pompage (3) et une optique de couplage (4), ainsi qu'un résonateur (2) comprenant un miroir de couplage (6), un milieu laser (7) et un miroir de découplage (8),
le module de pompage (1) et le résonateur (2) étant placés l'un par rapport à l'autre de façon telle qu'un premier axe optique (5) défini par la source de lumière de pompage (3) et l'optique de couplage (4) fasse un angle (12) supérieur à 0° avec un deuxième axe optique (11) défini par le résonateur (2),
caractérisé par le fait que l'angle entre le premier et le deuxième axes optiques (5, 11) est inférieur à 1°.

2. Laser selon la revendication 1, caractérisé par le fait que l'angle (12) entre le premier et le deuxième axes optiques (5, 11) est compris entre 0,05° et 1°.

3. Laser selon l'une des revendications 1 et 2, caractérisé par le fait que la source de lumière de pompage (3) présente une ou plusieurs diodes laser.

4. Laser selon l'une des revendications 1 à 3, caractérisé par le fait que le milieu laser est un corps solide (7), en particulier un cristal dopé.

5. Laser selon l'une des revendications 1 à 4, caractérisé par le fait qu'il présente une cristal non linéaire (19) de doublage de fréquence.

6. Laser à pompage longitudinal comprenant : un module de pompage (1) comprenant une source de lumière de pompage (3) et une optique de couplage (4) et un résonateur (2) comprenant un miroir de couplage (6), un milieu laser (7) et un miroir de découplage (8),
caractérisé par le fait que la forme géométrique du miroir de couplage (6) est choisie de façon telle que la normale (20) à la surface (13) du miroir de couplage (6) dirigée vers le module de pompage (1) fasse un angle (21) supérieur à 0° et inférieur à 1° avec un axe optique (11) défini par le résonateur (2).

7. Laser selon la revendication 6, caractérisé par le fait que l'angle (21) est choisi entre 0,05° et 1°.

8. Laser selon l'une des revendications 6 et 7, caractérisé par le fait que la source de lumière de pompage présente une ou plusieurs diodes laser (3).

9. Laser selon les revendications 6 à 8, caractérisé par le fait que le milieu laser est un corps solide (7), en particulier un cristal dopé.

10. Laser selon l'une des revendications 6 à 9, caractérisé par le fait qu'il présente un cristal non linéaire (19) de doublage de fréquence.

11. Laser selon l'une des revendications 6 à 10, caractérisé par le fait qu'entre la source de lumière de pompage (3) et le résonateur (2) est placé un filtre (18) qui laisse passer dans une large mesure la lumière de pompage et arrête dans une large mesure une ou plusieurs des longueurs d'onde produites par le laser.

12. Laser selon la revendication 11, caractérisé par le fait qu'au moins un élément de l'optique de couplage (4) est un filtre (18).
